# EUROPÄISCHE PATENTSCHRIFT

(11) **EP 3 631 269 B1**
(45) Veröffentlichungstag und Bekanntmachung des Hinweises auf die Patenterteilung: **09.06.2021**
(21) Anmeldenummer: 18727674.6
(22) Anmeldetag: 15.05.2018
(51) Int. Cl.: F16L 13/14, F16L 33/22, B21D 39/04

(54) **KUPPLUNG ZUR HERSTELLUNG EINER PRESSVERBINDUNG ZWISCHEN ZWEI ROHREN**
COUPLING FOR ESTABLISHING A PRESS CONNECTION BETWEEN TWO PIPES
DISPOSITIF D'ACCOUPLEMENT PERMETTANT D'OBTENIR UNE LIAISON SERRÉE ENTRE DEUX TUBES

(30) Priorität: 26.05.2017 DE 102017005028
(43) Veröffentlichungstag der Anmeldung: 08.04.2020
(73) Patentinhaber: Eugen Riexinger GmbH&Co. KG, 75378 Bad Liebenzell (DE)
(72) Erfinder: THEOBALD, Marcus, 57242 Neuhausen (DE); KNECHT, Karl, 79736 Rickenbach (DE)
(74) Vertreter: Ludewig, Rita
(86) Internationale Anmeldenummer: PCT/EP2018/000255
(87) Internationale Veröffentlichungsnummer: WO 2018/215090

(56) Entgegenhaltungen:
- EP-A1- 1 288 554
- EP-A1- 2 921 755
- EP-B1- 0 582 543
- US-A- 4 061 367

## Beschreibung

Die Erfindung betrifft eine Kupplung zur Herstellung einer Preßverbindung zwischen zwei Rohren zur Neuinstallation oder Reparatur von Rohrleitungen in Anlagen oder Bereichen, in denen aus Sicherheitsgründen nicht geschweißt werden darf, insbesondere in Bereichen, in denen explosionsgefährdete, leicht brennbare oder empfindliche Medien für Medizin, Chemie und Nahrungsmittel in Rohrsystemen geführt werden.

Aus der EP 2 921 755 A1 ist eine Kupplung zur Herstellung einer Pressverbindung zwischen zwei Rohren bekannt. Es ist Aufgabe die Pressverbindung so weiter zu entwickeln, dass ein sauberes Anlegen der zu verbindenden Rohrenden in einem Verbindungsteil möglich ist, sich das Presswerkzeug beim Pressvorgang nicht öffnen und die Presshülsen weder radial noch axial unkontrolliert zu bewegen sind und beim Pressvorgang Deformierungen minimiert und der Pressvorgang kontrolliert erfolgen kann. Die Lösung ist gekennzeichnet, dadurch dass an einem Grundkörper eines Verbindungsstücks der mittlere Bereich als radial nach außen gerichteter doppelstufiger Bund ausgebildet ist, dessen erster Stufenbereich sich radial verjüngende Stirnflächen aufweist, an die ein zweiter Stufenbereich mit einer beidseitig radial senkrecht verlaufenden Anschlagfläche anschließt an die jeweils einer der Haltebereiche axial angeformt ist, dessen Außenfläche, in axialer Richtung nacheinander in einer abfallenden und einer ebenen Form verläuft und dass an den Presshülsen eine schanzenförmig ansteigende Kontur, an der Innenwand zwei abfallend geschwungene Rampen angeformt sind und an einem Ende in einer Stirnfläche eine Ausnehmung angeordnet ist. Die Lösung hat sich offensichtlich in der Praxis bewährt. Bei der Pressverbindung von Rohren mit sehr dünnen Wänden können jedoch Deformierungen in den Innenflächen der Rohrenden auftreten, wobei die Nutzung einer derartigen Pressverbindung in bestimmten Anwendungsbereichen nachteilige Folgen mit sich bringen kann.

Es ist aus der EP 0 582 543 B1 auch eine zur Herstellung einer Rohrverbindung dienende Kupplungsvorrichtung bekannt, deren Aufgabe darin besteht, aus nur wenigen miteinander zu verbindenden Teilen bestehen, eine sichere Positionierung der Rohrenden in einem von einer Stütz- und Presshülse gebildeten Ringspalt und die Herstellung einer langlebigen und dichten Rohrverbindung gewährleisten. Die Aufgabe wird durch eine zweiteilige Kupplung, bestehend aus einer Stützhülse und einer Presshülse, die mindestens eine als Anschlag für die beiden Rohrenden dienende Rippe aufweisen, wobei die Presshülse länger ist, als die Stützhülse und die Press - und die Stützhülse aus einem aus Kunststoff bestehenden Hohlzylinder gebildet sind, in denen die Rippen aus Metall bestehen.

Diese Kupplungsvorrichtung erfüllt zwar ihre Aufgabe, ist aber nicht für Reparaturzwecke nutzbar, weil es eine unlösbare Rohrverbindung ist. Auch können die Rohrenden nicht fest miteinander verbunden werden. Der durch die Montage der Stützhülse und der Presshülse in und über den Rohrenden entstehende Spalt zwischen den Rohrenden wird durch die zwischen den Rohrenden verlaufenden Rillen der Stützhülse und der Presshülse ausgefüllt, überbrückt den Zwischenraum der Rohrenden und schließt den Zwischenraum erst durch den Pressvorgang. Verschiebungen der Rohrenden sind deshalb nicht ausgeschlossen. Die Axialkräfte werden nicht symmetrisch verteilt.

Es war deshalb Aufgabe der Erfindung, eine Pressverbindung für die Neuinstallation und besonders für die Reparatur von Rohrleitungen in Anlagen oder Bereichen, in denen aus Sicherheitsgründen nicht geschweißt werden darf, insbesondere in Bereichen, in denen explosionsgefährdete, leicht brennbare oder empfindliche Medien für Medizin, Chemie und Nahrungsmittel in Rohrsystemen geführt werden, so weiter zu entwickeln, dass ein sauberes Anlegen der zu verbindenden Rohrenden in einem Verbindungsteil bereits bei der Montage möglich ist, der Pressvorgang einen Selbstzentrierungseffekt an den zu verbindenden Rohrenden bewirkt, beim Pressvorgang Deformierungen, Quetschungen oder Verletzungen der Rohrinnenwände gänzlich vermieden werden und eine symmetrische und kontrollierte Kraftverteilung und eine absolut kontrollierte Pressung zu erreichen ist.

Die Aufgabe wird mit den Merkmalen des Anspruchs 1 dadurch gelöst, dass die Kupplung eine einstückige zylinderförmige Stützhülse umfasst, die beidseitig in den zu verbindenden Rohrenden anzuordnen ist und einen mittig, radial nach außen angeformten Bund mit gegenüberliegenden Stirnflächen, einen, beidseitig vom Bund, angeformten Bereich mit Längsrillen am stirnseitigen Ende, mehrere voneinander beabstandete, radial nach innen eingeformte ringförmige Ausnehmungen am Außenmantel, die voneinander getrennt sind durch radial nach außen angeformte ringförmige Stützflächen und eine Stirnfläche mit einer nach innen abfallende Fase aufweist, und dass der mittige doppelstufige Bund der Kupplungshülse an seiner Innenfläche mittig einen radial nach außen gerichteten Bund mit beidseitig verlaufenden Stirnflächen aufweist, dessen Breite der des Bundes der Stützhülse entspricht, aufweist.

Besonders hervorzuheben ist, dass durch den konstruktiven Aufbau der einstückigen Stützhülse mit dem mittig und radial nach außen angeformten Bund und seinen radialen Stirnflächen zusammen mit den Stirnflächen des radial nach außen gerichteten Bundes an der Innenfläche der Kupplungshülse, gemäß Anspruch 1, sowie deren axiale Stirnflächen, die gleich breit sind und gemäß des Anspruchs 2, radial aufeinander angeordnet sind, wodurch sie zwischen der Stützhülse und der Kupplungshülse einen Hohlraum zur Aufnahme der Rohrenden bilden.

Nach der Montage der Stützhülse und der Kupplungshülse in und auf die beiden Rohrenden, entsteht, gemäß dem Anspruch 3, durch die radial nach außen verlaufenden Stirnflächen des Bundes der Stützhülse und der Stirnflächen des Bundes an der Innenfläche der Kupplungshülse, die eine glatte und ebene Oberfläche aufweisen, ein mittiger Positionsring, eine exakt mittige Justierung der Kupplungshülse und ein sauberer geschlossener Anschlag zu den beiden ebenen Rohrenden, die beim Pressvorgang nicht verschoben werden können. Dieser Anschlag unterstützt außerdem den Ausgleich der Kräfte der Rohrauszugsrichtung und deren Überbrückung zwischen den beiden Rohrenden.

Von Vorteil sind auch die Ausnehmungen in der Stützhülse und der, gegenüberliegend angeordneten, ringförmigen Bunde der Kupplungshülse, gemäß der Ansprüche 4 und 5. Sie bilden zwischen der Oberfläche der Stützhülse und der Innenfläche der Rohrenden ringförmige Hohlräume und vergrößern die Oberfläche zwischen der Innenfläche der Rohrenden und der Stützhülse. Beim Pressvorgang entstehende Flächenverformungen der Rohrinnenflächen, die so von den Ausnehmungen aufgenommen und ausgeglichen werden können. Außerdem entsteht ein Formschluss zwischen den Rohrinnenflächen und der Stützhülse. Die Innenflächen der Stützhülse werden vor Deformierungen im Inneren der Stützhülse geschützt und der Rohrdurchgang an der Kupplungsstelle bleibt unverändert zylindrisch.

Hervorzuheben sind auch die Längsrillen, die gemäß Anspruch 6, durch am jeweiligen stirnseitigen Ende des Haltebereiches der Stützhülse eingeformt sind. Sie bilden eine Verdrehungssicherung der Stützhülse innerhalb der Rohrenden beim Pressvorgang.

Von besonderer Bedeutung ist außerdem die Anwendbarkeit der erfindungsgemäßen Kupplung in vorhandenen Rohrsystemen zu Reparaturzwecken. Dabei werden die Presshülsen aufgetrennt und die Kupplungshülse der Kupplung, die die Rohrenden miteinander verbindet ist leicht demontierbar und ohne Beschädigungen an den Rohrenden austauschbar. Der Reparaturvorgang ist einfach, läßt sich schnell ausführen und trägt somit zur Kostenminimierung bei.

Schließlich kann hervorgehoben werden, daß die Kupplung für alle Rohrmaterialien benutzt werden kann und dass sie hinsichtlich ihrer Baugrößen den jeweiligen Erfordernissen anzupassen ist.

Die Erfindung soll nachfolgend an einem Ausführungsbeispiel näher beschrieben werden. Dabei zeigen
Fig. 1 die Seitenansicht der Kupplung als einseitig geschlossene Pressverbindung für zwei Rohre.
Fig. 2 einen Schnitt A-A durch eine Rohrverbindung mit der erfindungsgemäßen Kupplung.
Fig. 3 eine Vorderansicht der Stützhülse,

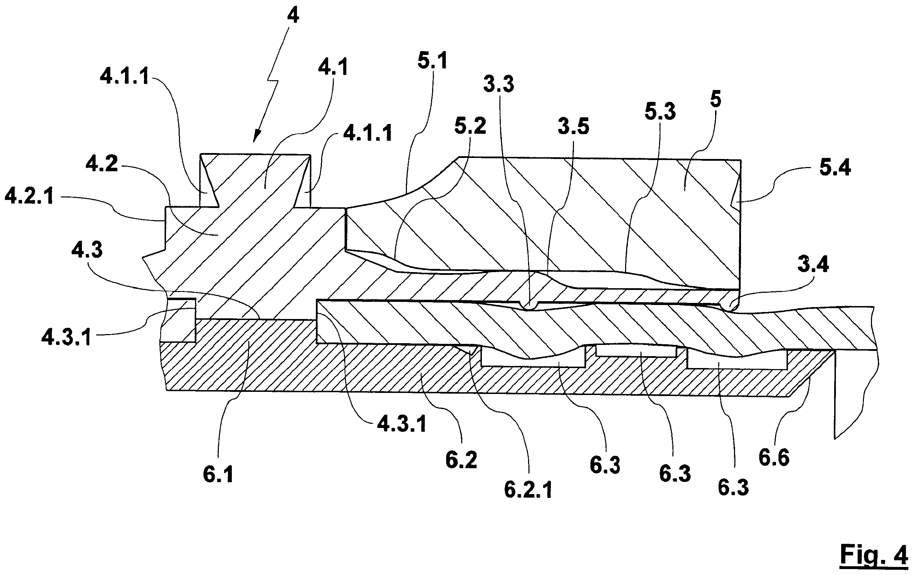

Fig. 4 einen Ausschnitt des rechten verpressten Teils von Fig.2

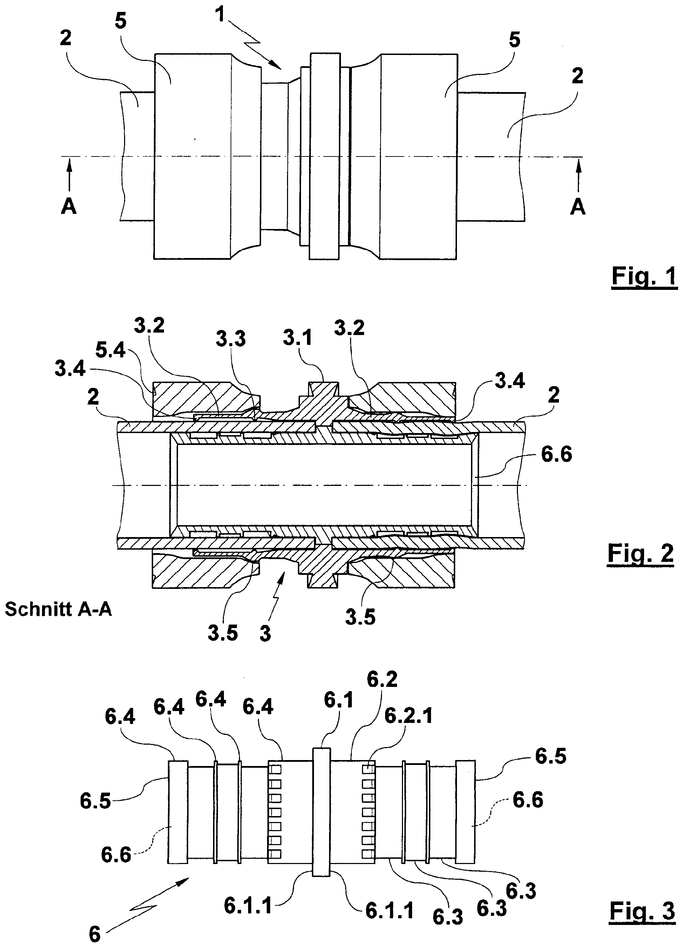

In einem Ausführungsbeispiel wird, gemäß Fig. 2, auf je ein Rohrende 2 jeweils eine Preßhülse 5 mit ihrer kleineren Stirnfläche zum Rohrende 2 ragend aufgeschoben und auf eines der beiden Rohrenden 2 wird vor die Presshülse 5 zusätzlich eine Kupplungshülse 3 aufgesteckt, die einen mittleren Bereich, einen beiderseits anschließenden Haltebereich 3.2, mit mindestens einem nach innen gerichteten ersten Bund 3.3 und endseitig einem zweiten Bund 3.4 und deren Außenwand der Haltebereiche 3.2 gegenüber dem ersten Bund 3.3 mit einer nach außen gekrümmtem Wulst 3.5 versehen ist, wobei der mittlere Bereich 3.1 als radial nach außen gerichteter doppelstufiger Bund 4 ausgebildet ist, dessen erster Stufenbereich 4.1 sich radial verjüngende Stirnflächen 4.1.1 aufweist, an die sich ein zweiter Stufenbereich 4.2 mit einer beidseitig radial verlaufenden Anschlagfläche 4.2.1 anschließt und an die Anschlagflächen 4.2.1 jeweils einer der Haltebereiche 3.2 axial angeformt ist, dessen Außenfläche, in axialer Richtung nacheinander in einer abfallenden und einer ebenen Form verläuft. An der Innenfläche des Bundes 4 ist darüber hinaus ein radial nach außen gerichteter Bund 4.3 mit radialen Stirnflächen 4.3.1 angeformt, der zwischen den Rohrenden etwa bis zur radialen Mitte der Rohrstärke, als Anschlag dient. Jetzt kann die Stützhülse 6 mit ihren beiden, beidseitig des mittig angeformten Bundes 6.1, angeformten Bereichen 6.2 mit den Ausnehmungen 6.3 und Stützflächen 6.4 in die zu verbindenden Rohrenden 2 eingsteckt werden, bis die ebenen Stirnflächen der Rohrenden 2 im unteren Bereich an den Stirnflächen 6.1.1 des Bundes 6.1 und im oberen Bereich an den Stirnflächen 4.3.1 des Bundes 4.3 der Kupplungshülse 3 fest anschlagen. Nun kann die Kupplungshülse 3 von dem einen Rohrende 2 zur Mitte des Possitionierringes, der durch die Mantelfläche des Bundes 6.1 und die Mantelfläche des Bundes 4.3 entstanden ist, geschoben werden bis die Kupplungshülse 3 mit ihrem Bund 4.3 in radialer Richtung auf dem Bund 6.1 der Stützhülse 6 justiert ist, wodurch der erste Bund 3.3 und der zweite Bund 3.4 der beiden Haltebereiche 3.2 der Kupplungshülse 3 über den Ausnehmungen 6.3 der beidseitig an den Bund 6.1 angeformten Bereiche 6.2 der Stützhülse 6 zu liegen kommt.

Danach werden die axial verschiebbaren Presshülsen 5, an deren zum doppelstufigen Bund 4 gerichteten Ende eine schanzenförmig ansteigende Kontur 5.1 und an ihrer Innenwand in axialer Richtung zwei nacheinander abfallend geschwungene Rampen 5.2, 5.3 angeformt sind und an dessen vom doppelstufigen Bund 4 abgewandten Ende eine ringförmige Stirnfläche über eine axial nach innen gerichtete Ausnehmung 5.4 verfügt, von den Rohrenden 2 auf die Außenwand der Haltebereiche 3.2 der Kupplungshülse 3 geschoben, bis die erste geschwungene Rampe 5.2 der Presshülsen 5 auf der Wulst 3.5 des jeweiligen Haltebereichs 3.2 aufliegt. Nun wird ein für die erfinderische Kupplung hergestelltes Presswerkzeug auf den ersten Stufenbereich 4.1 des doppelstufigen Bundes 4 der vormontierten Kupplung aufgesetzt, dabei rasten gegeneinander gerichtete Krallen des Presswerkzeuges in die sich in radialer Richtung zur Achse verjüngenden Stirnflächen 4.1.1 des doppelstufigen Bundes der Kupplungshülse 3 und in die Ausnehmungen 5.4 in den äußeren Stirnflächen der Presshülse 5 ein. Das Presswerkzeug ist jetzt so mit den zu verpressenden Teilen der Kupplung verbunden, dass die Presshülsen 5 beidseitig gegen den mittleren Bereich 3.1 der Kupplungshülse 3 gedrückt werden. Dabei werden die axialen Schubteilkräfte in Richtung Achsmitte geleitet, wodurch die Wulst 3.5 in die Hohlräume zwischen der Innenwand der Preßhülsen 5 und der Außenwand der Haltebereiche 3.2 sowie der an der Innenwand der Haltebereiche 3.2 nach innen gerichtete Bund 3.3 gegenüber der Wulst 3.5 in die Oberfläche des Rohrmaterials der Rohrenden 2 gepresst. Durch das weitere axiale Schieben der Presshülsen 5 gegen den doppelstufigen Bund 4 wird der am Ende der Bereiche 3.2 ebenfalls nach innen gerichtete Bund 3.4 in die Oberfläche des Rohrmaterials der Rohrenden 2 gepresst. An den Stellen der Bunde 3.3 und 3.4 werden die Flächenverformungen der Rohrwände in die darunter liegenden Ausnehmungen 6.3 der Stützhülse 6 gedrückt und bilden so einen Formschluss zwischen den Rohrwänden und der Stützhülse 6. Gleichzeitig wird die kleine Stirnfläche der Presshülsen 5 gegen die gegenüberliegend an den zweiten Stufenbereich 4.2 des doppelstufigen Bundes 4 an die senkrechten Stirnflächen 4.2.1 gepreßt. Erst wenn alle Kupplungsteile sauber und exakt an- und aufeinander lagern kann das Preßwerkzeug gelöst und der Pressvorgang abgeschlossen werden.

### Aufstellung der verwendeten Bezugszeichen

- 1: Kupplung
- 2: Rohrenden,
- 3: Kupplungshülse,
- 3.1: mittlerer Bereich,
- 3.2: Haltebereiche
- 3.3: erster Bund gegenüber der Wulst,
- 3.4: zweiter Bund am Ende des Haltebereiches,
- 3.5: Wulst
- 4.: doppelstufiger Bund,
- 4.1: erster Stufenbereich,
- 4.1.1: sich radial verjüngende Stirnflächen,
- 4.2: zweiter Stufenbereich,
- 4.2.1: senkrechte Stirnflächen,
- 4.3: radialer Bund an der Innenfläche der Kupplungshülse,
- 4.3.1: radiale Stirnflächen,
- 5.: Presshülsen,
- 5.1: schanzenförmig ansteigende Kontur,
- 5.2: geschwungene Rampe,
- 5.3: geschwungene Rampe,
- 5.4: Ausnehmung,
- 6.: Stützhülse,
- 6.1: mittig radial angeformter Bund,
- 6.1.1: Stirnflächen,
- 6.2.: angeformte Bereiche,
- 6.2.1: axiale Rillen,
- 6.3.: Ausnehmungen,
- 6.4.: Stützflächen,
- 6.5.: Stirnflächen,
- 6.6.: Fasen

## Patentansprüche

1. Kupplung zur Herstellung einer Pressverbindung zwischen zwei Rohren, bestehend aus einer beide Rohrenden (2) umfassenden muffenförmigen, rotationssymmetrischen Kupplungshülse (3) mit Bunden (3,3, 3.4) und einem mittigen doppelstufigen Bund (4) und aus zwei, die Kupplungshülse (3) umgreifenden, axial verschiebbaren Presshülsen (5), die mit einem Presswerkzeug verbunden werden können, **dadurch gekennzeichnet,**
**dass** die Kupplung eine einstückige zylinderförmige Stützhülse (6) umfasst, die beidseitig in den zu verbindenden Rohrenden (2) anzuordnen ist und einen mittig radial nach außen angeformten Bund (6.1) mit gegenüberliegenden Stirnflächen (6.1.1) und beidseitig des Bundes (6.1) jeweils einen angeformten Bereich (6.2) mit Längsrillen (6.2.1) am stirnseitigen Ende, mehrere voneinander beabstandete, radial nach innen eingeformte ringförmige Ausnehmungen (6.3) am Außenmantel, die durch radial nach außen angeformte ringförmige Stützflächen (6.4) voneinander getrennt sind und eine Stirnfläche (6.5) mit einer nach innen abfallende Fase (6.6) aufweist, und
**dass** der mittige doppelstufige Bund (4) der Kupplungshülse (3) an seiner Innenfläche mittig einen radial nach außen gerichteten Bund (4.3) mit beidseitig verlaufenden Stirnflächen (4.3.1) aufweist, dessen Breite dem des Bundes (6.1) der Stützhülse (6) entspricht.

2. Kupplung zur Herstellung einer Pressverbindung zwischen zwei Rohren, nach Anspruch 1, **dadurch gekennzeichnet, dass** die axialen Stirnflächen des mittigen Bundes (4.3) der Kupplungshülse (3) und des Bundes (6.1) der Stützhülse (6) radial aufeinander angeordnet sind.

3. Kupplung zur Herstellung einer Pressverbindung zwischen zwei Rohren, nach Anspruch 1, **dadurch gekennzeichnet, dass** die radial nach außen verlaufenden Stirnflächen (6.1.1, 4.3.1) glatte und ebene Oberflächen aufweisen mit denen für die beidseitig eingeführten Rohrenden (2) eine korrekt mittige Position und ein sauberer geschlossener Anschlag herzustellen ist.

4. Kupplung zur Herstellung einer Pressverbindung zwischen zwei Rohren, nach Anspruch 1, **dadurch gekennzeichnet, dass** die Ausnehmungen (6.3) der Stützhülse (6) den ringförmigen Bunden (3.3, 3.4) der Kupplungshülse (3) gegenüberliegend angeordnet sind.

5. Kupplung zur Herstellung einer Pressverbindung zwischen zwei Rohren, nach einem der vorhergehenden Ansprüche, **dadurch gekennzeichnet, dass** mit, in die Oberfläche der Bereiche (6.2) radial mit ihren nach innen eingeformten, ringförmigen Ausnehmungen (6.3) zwischen der Oberfläche der Stützhülse (6) und der Innenfläche der Rohrenden (2) ringförmige Hohlräume zu bilden sind.

6. Kupplung zur Herstellung einer Pressverbindung zwischen zwei Rohren, nach einem der vorhergehenden Ansprüche, **dadurch gekennzeichnet, dass** die Längsrillen (6.2.1), die jeweils am stirnseitigen Ende des Bereiches (6.2) angeordnet sind beim Pressvorgang eine Verdrehungssicherung der Stützhülse (6) bilden.

## Claims

1. A coupling for establishing a press connection between two pipes, consisting of a rotationally symmetrical bushing-like coupling sleeve (3) which contains both pipe ends (2), said sleeve including collars (3.3, 3.4) and a central two-step collar (4), and two axially displaceable press sleeves (5) which encompass the coupling sleeve (3), the press sleeves capable of being connected using a press tool, **characterized in that**
the coupling comprises a one-piece cylindrical support sleeve (6) which is located inside of and at both ends of the pipe ends (2) to be connected and which comprises a central collar (6.1) molded on radially outwardly with opposing end faces (6.1.1), and respective molded-on areas (6.2) with longitudinal grooves (6.2.1) at the outer end on both sides of the collar (6.1), a plurality of annular recesses (6.3) separated from each other on the outer casing, the recesses being radially inwardly molded and being separated from one another by radial outwardly molded-on annular support surfaces (6.4), and an end face (6.5) with a bevel (6.6) which slopes inwardly, and
that the central two-step collar (4) of the coupling sleeve (3) comprises a radially outwardly directed central collar (4.3) at the inner surface of the two-step collar, said outwardly directed collar having end faces (4.3.1) running on both sides, the width of the outwardly directed collar corresponding to the width of the collar (6.1) of the support sleeve (6).

2. The coupling for establishing a press connection between two pipes, according to claim 1, **characterized in that** the axial end faces of the central collar (4.3) of the coupling sleeve (3) and the collar (6.1) of the support sleeve (6) are disposed radially one on top of the other.

3. The coupling for establishing a press connection between two pipes according to claim 1, **characterized in that** the radially outwardly directed end faces (6.1.1, 4.3.1) have smooth and flat surfaces with which to establish a correct central position and a cleaner closed abutment for the pipe ends (2) inserted on both sides.

4. The coupling for establishing a press connection between two pipes, according to claim 1, **characterized in that** the recesses (6.3) of the support sleeve (6) are disposed opposite to the annular collars (3.3, 3.4) of the coupling sleeve (3).

5. The coupling for establishing a press connection between two pipes according to one of the preceding claims, **characterized in that** annular cavities are formed between the surface of the support sleeve (6) and the inner surface of the pipe ends (2) in the surface of the areas (6.2) with the radially inwardly molded annular recesses (6.3).

6. The coupling for establishing a press connection between two pipes according to one of the preceding claims, **characterized in that** the longitudinal grooves (6.2.1) which are disposed at the respective outer ends of the area (6.2) form a twist prevention for the support sleeve (6) during the pressing step.

## Revendications

1. Dispositif d'accouplement permettant de réaliser une liaison serrée entre deux tubes, constitué d'un manchon de couplage (3), symétrique en rotation, en forme de fourreau, ceignant les deux extrémités de tube (2), avec des colliers (3.3, 3.4) et un collier (4) central à deux niveaux et deux manchons de serrage (5), pouvant être déplacés axialement, entourant le manchon de couplage (3), qui peuvent être reliés avec un outil de pressage, **caractérisé en ce**
**que**, le dispositif d'accouplement comprend un manchon d'appui (6) en une seul pièce en forme de cylindre qui est à disposer dans les extrémités de tube (2) à relier, qui est disposé des deux côtés et qui comporte au centre un collier (6.1) y étant rapporté radialement vers l'extérieur, avec des surfaces frontales (6.1.1) opposées et des deux côtés du collier (6.1), respectivement une zone (6.2) moulée dessus avec des rainures longitudinales (6.2.1) à l'extrémité côté frontal, plusieurs évidements (6.3) de forme annulaire, espacés les uns des autres, moulés radialement vers l'intérieur sur l'enveloppe extérieure, qui sont séparés les uns des autres par des surfaces d'appui (6.4) de forme annulaire moulées dessus radialement vers l'extérieur et une surface frontale (6.5) dotée d'un chanfrein (6.6) incliné vers l'intérieur,
**que** le collier (4) central à deux niveaux du manchon de couplage (3) comporte au milieu de sa surface intérieure un collier (4.3), orienté radialement vers l'extérieur, muni de surfaces frontales (4.3.1) s'étendant des deux côtés, dont la largeur correspond à celle du collier (6.1) du manchon d'appui (6).

2. Dispositif d'accouplement permettant de réaliser une liaison serrée entre deux tubes selon la revendication 1, **caractérisé en ce que** les surfaces frontales axiales du collier (4.3) central du manchon de couplage (3) et du collier (6.1) du manchon d'appui (6) sont disposées les unes sur les autres radialement.

3. Dispositif d'accouplement permettant de réaliser une liaison serrée entre deux tubes selon la revendication 1, **caractérisé en ce que** les surfaces frontales (6.1.1, 4.3.1) s'étendant radialement vers l'extérieur présentent des surfaces lisses et planes avec lesquelles une position centrale correcte pour les extrémités de tubes (2) insérées des deux côtés et une butée fermée propre peuvent être réalisées.

4. Dispositif d'accouplement permettant de réaliser une liaison serrée entre deux tubes selon la revendication 1, **caractérisé en ce que** les évidements (6.3) du manchon d'appui (6) sont disposés en face des colliers (3.3, 3.4) en forme annulaire du manchon de couplage (3).

5. Dispositif d'accouplement permettant de réaliser une liaison serrée entre deux tubes selon l'une des revendications précédentes, **caractérisé en ce que** des espaces creux en forme d'anneaux peuvent être formés avec des évidements (6.3) de forme annulaire, formés radialement vers l'intérieur dans la surface des zones (6.2), entre la surface du manchon d'appui (6) et la surface intérieure des extrémités de tubes (2).

6. Dispositif d'accouplement permettant de réaliser une liaison serrée entre deux tubes selon l'une des revendications précédentes, **caractérisé en ce que** les rainures longitudinales (6.2.1), qui sont respectivement disposées à l'extrémité côté frontal de la zone (6.2), forment un dispositif anti-torsion du manchon d'appui (6) lors du processus de compression.
